# EUROPEAN PATENT SPECIFICATION

(11) **EP 3 009 058 B1**
(45) Date of publication and mention of the grant of the patent: **24.02.2021**
(21) Application number: 14188668.9
(22) Date of filing: 13.10.2014
(51) Int. Cl.: A47L 7/00, A47L 9/28

(54) **Vacuum cleaner pneumatically connected to a power tool, method for controlling operation parameters of such a vacuum cleaner and power tool for pneumatic connection to such a vacuum cleaner**
Pneumatisch an ein Elektrowerkzeug angeschlossener Staubsauger, Verfahren zur Steuerung der Betriebsparameter solch eines Staubsaugers und Elektrowerkzeug zum pneumatischen Anschließen an solch einen Staubsauger
Aspirateur relié pneumatiquement à un outil électrique, procédé de commande de paramètres de fonctionnement d'un tel aspirateur et outil électrique pneumatique pour connexion à un tel aspirateur

(43) Date of publication of application: 20.04.2016
(73) Proprietor: Valentini, Guido, 20122 Milano (IT)
(72) Inventor: Valentini, Guido, 20122 Milano (IT)
(74) Representative: Herrmann, Jochen

(56) References cited:
- EP-A1- 2 687 331
- EP-A2- 2 628 427
- DE-A1-102010 040 336

## Description

The present invention refers to a combination of a vacuum cleaner and a power tool according to the preamble of claim 1.

The term "vacuum cleaner" used in connection with the present invention comprises all types of dust extractor devices, mobile or static. The "vacuum cleaner" can also be named a "safety dust extractor" because it significantly enhances operation safety for an operator of the tool in that it reduces pollution and contamination of the air surrounding the tool and the operator with fine dust, thereby reducing the danger of explosion and the health threat for the user.

The dust extraction device is part of the tool and actively draws dust from the working surface of the workpiece and conveys it to a dust duct, which is connected to the vacuum cleaner by means of a pneumatic hose (suction tube) or the like. The dust extraction device may comprise a fan assembly, which is also driven by the tool's motor. The fan assembly creates a low pressure between the tool's working element and the working surface of the workpiece for aspiration of dust laden air from the working surface. The fan assembly conveys the dust laden air to the dust duct and into the hose leading to the vacuum cleaner. Additionally or alternatively, the dust extraction device could comprise through-holes, channels and conducts which interconnect that side of the tool's working element facing the working surface of the workpiece with the tool's dust duct. If the tool has no fan assembly or the like, the low pressure for aspiring dust laden air from the working surface and for conveying it to the dust duct is generated by the vacuum cleaner connected to the tool's dust duct by means of the pneumatic hose.

Operating vacuum cleaners at different aspiration performances has been known for many years. For example, DE 32 43 723 A1 describes a power control unit for a vacuum cleaner which allows users to adapt the vacuum cleaner's aspiration performance. Furthermore, it has been known for a long time to pneumatically connect a vacuum cleaner to a power tool, which generates dust during its operation, in order to aspire dust laden air directly from the working surface and to convey it into the vacuum cleaner. Due to increasingly strict requirements regarding the maximum dust concentration allowed in the air surrounding tools currently operating, a number of measures have been taken in order to maximize dust extraction by the tool and aspiration of dust laden air by the vacuum cleaner. These measures comprise operating the vacuum cleaner's motor at a high operating speed if not at maximum speed, in order to increase the vacuum cleaner's aspiration performance.

However, this has the disadvantage that energy consumption is rather high and that the low pressure between the tool's working element and the working surface of the workpiece becomes so strong that the working element is sucked against the working surface from time to time. This is the case in particular for those tools, where a large part of the surface of the working element lies on the working surface of the workpiece, like sanders or polishers. The continuous sucking action of the tool's working element against the workpiece's working surface makes the process of working the surface rather difficult and may result in an undesired patchy or uneven surface. In particular, the working element being sucked against the working surface from time to time may create dimples, scratches and indentations in the working surface.

EP 2 628 427 A2 and DE 10 2010 040 336 A1 both refer to a combination of a vacuum cleaner and a power tool, where one or more operation parameters of the vacuum cleaner (e.g. speed of the motor) are adjusted depending on certain information relating to the current use of a power tool and/or characteristics of the power tool and previously received from the power tool.

EP 2 687 331 A1 discloses a vibration monitoring device assigned to a hand-guided power tool. The monitoring device determines a vibration value of the tool during its use. Based on the determined vibration value, the monitoring device calculates a time period how long the user may maximally use and operate the tool without exceeding threshold values defined in accordance with respective regulations (e.g. EN 60745, EN 792-8, EN 28662 and EN 28927).

Therefore, it is an object of the present invention to improve the transmission of information regarding characteristics of the tool and/or its current use to the vacuum cleaner, in order to update the value of at least one of the operation parameters of the vacuum cleaner.

According to the present invention a combination of a vacuum cleaner and a power tool, comprising all features of claim 1 is suggested. In particular, the vacuum cleaner has electric connection means for connecting the tool to the vacuum cleaner by means of an electric power line providing the tool with the electric power necessary for its operation, wherein the reception means are adapted to receive the information from the tool via the power line by means of a power line communication between the tool and the vacuum cleaner.

The power tool which can be pneumatically connected to the vacuum cleaner can be any power tool which generates dust during its operation. In particular, but not limited to, the tool can be any kind of hand guided power tool, for example a grinder, a sander, a polisher, a planer, a drill, a glazing machine, a scouring machine, or an electric saw. Of course, the tool could also be a stationary power tool, for example a circular saw or a drill located on a stationary working table. The working table could be equipped with wheels allowing for a limited movement of the power tool to different sites of operation. However, a fixed or static tool is usually stationary during its operation. All these tools create dust the one way or the other during operation. Dust according to this invention comprises all kinds of pulverulent or small-particled material, which gathers on the working surface of the workpiece and/or in the air surrounding the tool or workpiece during operation of the tool. In particular, dust within the realm of this invention comprises small particles and dust of concrete, stone, wood, metal, composite materials (e.g. glass-fiber reinforced plastic, resin, body filler), plastic, cement, plaster, varnish or paint in various particle sizes as well as residual abrasive paste or the like.

The dust is drawn from the working area between the working element and the working surface into the vacuum cleaner. Dust on the working surface of the workpiece could impede or negatively affect proper working of the surface with the tool and its working element, respectively. In particular, an excess amount of dust could obstruct a user's free view onto the working area and could impede proper functioning of the working element, for example if excess dust sticks to the working element, e.g. in the fibers or filaments of a polishing pad or on the abrasive surface of an abrasive sheet material. An excess amount of dust in the air surrounding the tool or working area could lead to a dust concentration in the air exceeding approved maximum values and provoke negative health effects with the user of the tool and other people located near the operating tool. This is avoided with the vacuum cleaner according to the present invention.

The vacuum cleaner is equipped with reception means for receiving information regarding characteristics of the tool and/or its current use. The reception means may receive the information in any desired way. The reception of the information may be realized optically, electrically or in any other way, for example by means of vibrations of the tool. The reception of the information is realized by means of a physical connection between the tool and the vacuum cleaner, for example by means of any kind and any number of electric cables, a power line for providing the tool with electric energy, a light guide (e.g. one or more optical fibers), or a pneumatic hose transmitting vibrations from the tool to the vacuum cleaner.

In particular the information may be received as an analog or digital signal or as a digital data message comprising at least one bit, preferably a plurality of bits. The value (amplitude) of the analog signal or the width of modulated impulses of a digital PWM-signal or the content (payload) of the digital message is indicative of at least one characteristic of the tool and/or its current use. The information in form of a digital message can be transmitted from the tool to the vacuum cleaner using any desired transmission protocol for a data bus (e.g. LIN or I²C).

The information received can comprise almost any content regarding the characteristics of the tool and/or its current use. In particular, the reception means are adapted to receive information comprising but not limited to at least one of a group consisting of
a unique identification of the manufacturer of the tool and/or the type of tool,
a maximum speed a tool's motor can reach,
a current speed of the tool's motor,
a value for the electrical current currently drawn by the tool's motor,
a maximum amount of dust per time unit the tool can generate,
an amount of dust per time unit currently generated by the tool,
type or age of a currently mounted working element of the tool,
characteristics regarding a workpiece or a workpiece's working surface currently worked by the tool, and
a minimum value for a volume of aspired dust laden air per time unit necessary for drawing a predefined amount of the dust generated by the tool.

Besides that, the information received and processed by the vacuum cleaner can comprise the tool's technical properties, e.g. its nominal voltage, its nominal or maximum current, its nominal or maximum power, and/or a nominal or maximum rotational speed of its working element. The information can further comprise the tool's current use, e.g. the current rotational speed of the tool's working element, an amount of dust per time unit currently generated by the tool, or a type and age of a currently mounted working element, e.g. abrasive sheet material (paper or a fabric) with a certain granulation, certain type of polishing pad (cotton, micro fiber, wool), etc. The information can further comprise characteristics regarding a workpiece or a workpiece's surface (e.g. the type of material, its hardness, etc.). The information can also comprise typical values characterizing the tool. In particular, the information could comprise information about the kind of dust extraction device used with the tool (e.g. whether and what type of a suction hood or shroud is used, the length and diameter of the suction tube between the tool and the vacuum cleaner, the amount of dust the tool typically generates during its operation, etc.) and the dust extraction device's efficiency. This information can be determined beforehand for each type of tool according to standardized measuring procedures, for example the procedures suggested by the German BG Bau (Berufsgenossenschaft der Bauwirtschaft) in their publication "Abschlussbericht zum Forschungsprojekt, Bewertung des Staubemissionsverhaltens handgeführter Maschinen und Geräte für die Bearbeitung mineralischer Werkstoffe". All this information is available at the tool and at least part of it is transmitted to the vacuum cleaner. The information can be manually or automatically input and stored in a tool's storage device, by a manufacturer of the tool prior to shipment and use and/or by the user prior to an intended operation of the tool. Alternatively or additionally, the information can be automatically determined once or a plurality of times by respective sensors during operation of the tool.

The received information or part of it can be used to calculate an estimate of the amount of dust per time unit generated during operation of the tool on the workpiece and to calculate the correction signal used for updating the value of at least one operation parameter of the vacuum cleaner. The correction signal is calculated such that a desired amount of dust is aspired by the vacuum cleaner per time unit. Alternatively, the received information could be used to directly calculate the correction signal. As part of the invention it would even be possible to directly calculate the updated value of at least one operation parameter based on the received information. Furthermore, the received information or part of it can be used to initiate an alarm of acoustic or visual type. In particular, an alarm threshold could be adjusted according to the characteristics of the tool and/or its current use.

For example, according to the technical characteristics of the tool used in connection with the vacuum cleaner the tool may require an air flow rate of 50 m³/h to assure that most of the dust generated during operation of the tool is aspirated from the workpiece surface and the surrounding air. In that case the vacuum cleaner could be set as to generate a specified air flow rate of 60 m³/h. In prior art vacuum cleaners without the possibility of automatically adjusting one or more operation parameters, a threshold value for initiating an alarm would be set to 30 m³/h. Hence, if the air flow rate of the vacuum cleaner falls below the threshold value an alarm is initiated. However, in this example no alarm would be initiated if the vacuum cleaner's air flow rate falls below 50 m³/h (but remains above 30 m3/h), even though aspiration of the dust generated by the tool would be deteriorated. In contrast thereto in vacuum cleaners according to the present invention, the received information regarding tool characteristics and/or its current use or part of the information could be used for adapting the threshold value to the actual air flow required by the tool, for example to 50 m³/h. In that case an alarm would already be initiated if the vacuum cleaner's air flow falls below 50 m³/h.

A unique identification parameter of the tool could be used to retrieve additional information regarding the tool's characteristics at the vacuum cleaner. For example, additional information regarding the characteristics of one or more tools could be stored in a storage device of the vacuum cleaner in the form of a look-up table. The look-up table can be created and stored in the storage device of the vacuum cleaner by the manufacturer of the vacuum cleaner after manufacturing of the vacuum cleaner and prior to shipment and use. Alternatively, the additional information regarding the tool's characteristics could be stored in a storage device of the vacuum cleaner by the user of the vacuum cleaner. Inputting the information into the vacuum cleaner could be effected manually by means of an appropriate input device (e.g. a keypad available at or connectable to the vacuum cleaner) or automatically (e.g. by connecting an external storage device, like an USB-stick or a memory card, to the vacuum cleaner). The storage device with the information regarding the tool's characteristics could be provided to the user together with the tool upon purchase of the tool. Alternatively, the information could be downloaded from the Internet and stored on a storage device by the user. For example, it is possible that information for a plurality of different tools is stored in the vacuum cleaner and the appropriate information is read out and processed in the vacuum cleaner's processing means on the basis of the unique identification parameter of the tool received by the vacuum cleaner. This has the advantage that less information, in particular only the unique identification parameter of the tool, has to be transmitted from the tool to the vacuum cleaner and still allowing multiple information regarding the tool's characteristics to be taken into account when adjusting one or more operation parameters of the vacuum cleaner.

In the vacuum cleaner receiving and processing of the information received from the tool can be performed in a two-step process. In a first step, the vacuum cleaner's processing means verify whether they recognize the tool attached to the vacuum cleaner. If no information is received by the vacuum cleaner (e.g. because the tool is not adapted to transmit any information regarding its characteristics and/or its current use or because the tool is not adapted to transmit the information in the correct format required by the vacuum cleaner) or if the received information is not recognized by the processing means, the processing means cannot recognize the tool and could inhibit use of the tool for safety reasons. For example, in case the electrical connection of the tool is connected to a power socket in the vacuum cleaner the socket could be deactivated, thereby blocking (further) use of the tool together with this vacuum cleaner. In a second step, if the information received by the vacuum cleaner's processing means allows recognition of the tool, the vacuum cleaner can be operated in a manner optimized for the respective tool characteristics and/or the current use of the tool.

The tool could be equipped with one or more sensors adapted for determining current characteristics of the tool and/or its current use. For example, the tool could be equipped with one or more sensors adapted for determining the amount of dust per time unit currently generated by the tool during operation, for example the dust concentration in the tool's dust duct or the tool's dust extraction device, and/or the dust concentration in the air surrounding the tool. Preferably, such a sensor is an optical sensor which measures the dust concentration in the air passing through the dust extraction device, the dust duct and/or through the pneumatic hose into the vacuum cleaner. The characteristics retrieved by the one or more sensors of the tool are then transmitted to the vacuum cleaner as the information regarding the tool's characteristics and/or its current use either directly or after pre-processing.

Further, the received information can also comprise a minimum volume per time unit of drawn dust laden air necessary for drawing a predefined amount of the dust currently generated by the tool away from the tool. The minimum amount of dust per time unit to be drawn or the maximum dust concentration in the air surrounding the tool can be subject to regulations and/or standards. It is possible to determine for each tool or type of tool, for example after manufacturing of the tool and prior to shipment and use, the maximum amount of dust per time unit the tool can generate during operation and the minimum volume per time unit of dust laden air which has to be drawn from the tool in order to reliably fulfil the applicable regulations and/or standards under all circumstances. Based on the received value for the minimum volume per time unit of drawn dust laden air one or more operation parameters of the vacuum cleaner can be adjusted or updated such that the vacuum cleaner will aspire or suck the respective minimum volume of dust laden air per time unit.

The vacuum cleaner could be provided with one or more sensors at the vacuum cleaner's (clean) air outlet and/or (dust laden) air inlet. These sensors could be adapted for measuring the air flow rate in the outlet and/or inlet. By means of one or more of these sensors, the vacuum cleaner's at least one operation parameter could be adjusted by means of a closed loop control, in order to achieve a desired air flow rate of the vacuum cleaner and to assure aspiration of the dust laden air to fulfill the standardized or legal requirements for a maximum amount of allowed dust per volume in the air surrounding the tool during operation.

The vacuum cleaner comprises processing and calculation means for processing the received information and for calculating the correction signal for at least one of the vacuum cleaner's operation parameters based on the received information. The processing and calculation means are preferably part of a vacuum cleaner's control unit, which calculates and provides certain parts of the vacuum cleaner with appropriate control signals in order to enable a reliable operation of the vacuum cleaner as intended by the user. Those parts of an electrically actuated vacuum cleaner, which can receive a control signal, are, for example, the vacuum cleaner's electric motor and/or one or more electromagnetically actuated pneumatic valves for controlling air flow in the vacuum cleaner, in particular its direction and intensity. Preferably, the valves are actuated in order to initiate, control and terminate a filter cleaning process, in which the direction of an air flow passing through the filter elements is temporarily inversed. In a pneumatically actuated vacuum cleaner those parts, which can receive a control signal from the control unit, are, for example, electromagnetically actuated pneumatic valves for changing the vacuum cleaner's air flow and/or for initiating, controlling and terminating a filter cleaning process. The control unit may comprise a microprocessor on which a computer program can run, which is programmed to realize all steps of the control method according to the present invention if it is processed on the microprocessor.

Whether or not and to which extent the received information has to be processed in order to obtain a correct correction signal depends on the type and content of the received information. In order to determine the correction signal, it is necessary to recognize and consider the correlation between the received information and the particle or dust concentration in the air surrounding the tool and/or on the workpiece's working surface on the one hand and between the vacuum cleaner's operation parameters and the compliance with the applicable regulations and standards regarding approved dust concentration in the air on the other hand. This correlation makes it possible to calculate an appropriate correction signal for one or more operation parameters of the vacuum cleaner, such that the applicable regulations and standards in terms of approved dust concentration in the air surrounding the tool are fulfilled.

The vacuum cleaner's operation parameters, which can be corrected by means of the correction signal are, for example, but not limited to:
an air flow of the aspired dust laden air (volume per time unit),
a frequency of a filter cleaning process (number of cleaning processes per time unit),
an intensity of the filter cleaning process, or others.

The vacuum cleaner's air flow can be influenced, for example, by means of the speed of a motor of the vacuum cleaner actuating a turbine which creates a low pressure in the vacuum cleaner's dust collection container. Further, the air flow can be influenced by means of the amount of external bypass air allowed to enter the vacuum cleaner on the turbine's suction side, by means of the amount of air allowed to exit the vacuum cleaner on the turbine's dynamic pressure side, or by the amount of dust impinging the one or more filter elements, i.e. by the frequency of a filter cleaning process.

The vacuum cleaner has adjustment means for adjusting the at least one operation parameter based on the calculated correction signal. The adjustment means are preferably part of the vacuum cleaner's control unit. The control unit and the adjustment means, respectively, updates the control signal(s) for the respective operation parameter(s) based on the control signal(s) calculated by the processing and calculation means. The vacuum cleaner, which is operated based on the updated control signal(s), reliably fulfills the applicable regulations and standards in terms of approved dust concentration in the air surrounding the tool. The correct operation of the vacuum cleaner is adjusted online based on the tool currently used and connected to the vacuum cleaner and/or the current use of the tool.

Further features and advantages of the present invention are described in more detail hereinafter by reference to the drawings. The drawings show:
- Fig. 1: a schematic view of a vacuum cleaner and a tool not making part of the present invention;
- Fig. 2: a schematic view of a vacuum cleaner and a tool according to the present invention in a preferred embodiment;
- Fig. 3: a vacuum cleaner used in a preferred embodiment of the present invention;
- Fig. 4: a flow chart of a method for adjusting operation parameters of the vacuum cleaner; and
- Fig. 5: a hand guided or hand held tool used in a preferred embodiment of the present invention.

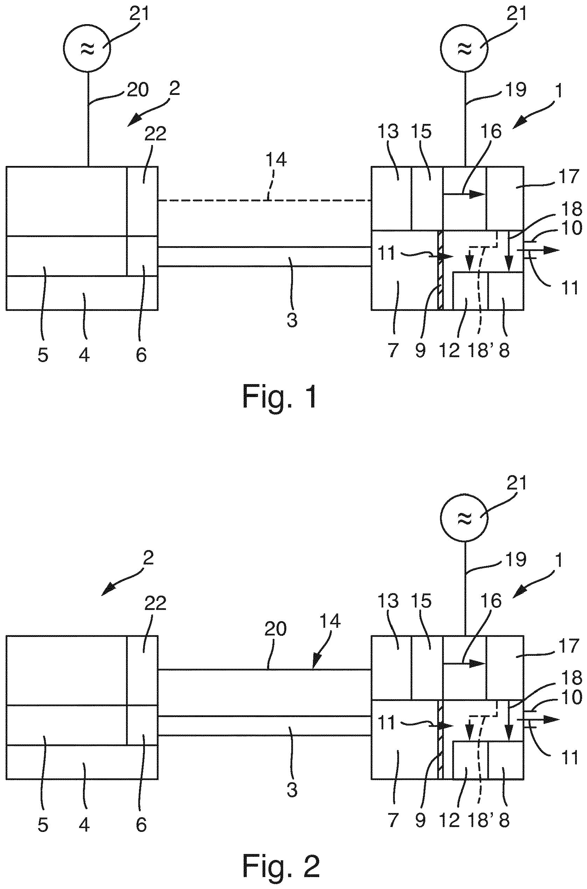

Figure 1 shows a vacuum cleaner 1 pneumatically connected to a hand held or hand guided power tool 2 by means of a pneumatic tube or hose 3. Of course, the tool 2 could also be a stationary or fixed power tool. The tool 2 can be a sander, a polisher, a glazing machine, a grinder, a planer, a drill, a scouring machine, an electrical saw or any other machine tool generating dust during its operation. The tool 2 comprises a working element 4, which - depending on the type of tool 2 - can be a supporting pad for receiving and holding abrasive sheet material (e.g. sanding paper or a sanding fabric). Furthermore, the working element 4 could comprise a drilling bit or a saw plate or the like. The tool 2 is adapted to work a working surface of a workpiece with the tool's working element 4, for example by grinding, sanding, polishing, glazing, scouring or sawing the surface. Furthermore, the tool 2 could be adapted to drill a hole in the surface and the workpiece. To this end, the working element 4 performs a rotational, an orbital, a random orbital, a roto-orbital, a planetary or a linear actuating movement.

Dust created by the tool 2 during its operation comprises all kinds of pulverulent or small-particled material. In particular dust within the realm of this invention comprises grinded concrete, stone, wood, metal, varnish or paint in various particle sizes as well as residual abrasive paste or the like.

The tool 2 is provided with a dust extraction device 5, which draws dust laden air from the working area on the surface of the workpiece during operation of the tool 2. The dust extraction device 5 can be adapted to aspire air together with the dust from the working area and to convey it to a connection device or dust duct 6. The hose or tube 3 from the vacuum cleaner 1 is connected to the tool 2 via the dust duct 6. The dust extraction device 5 can comprise a fan (not shown) creating a low pressure (below the ambient pressure) in the working area (i.e. between the working element and the workpiece) and an air flow at the dust duct 6. The fan can be actuated by a motor (not shown) of the tool 2 during its intended operation. Hence, the motor can actuate the working element 4 as well as the extraction device 5. The motor of the tool 2 can be an electric or a pneumatic motor. In the examples of figures 1 and 2 the motor is an electric motor. Of course, the fan could be actuated by an additional motor separate from the motor for actuating the working element 4.

The vacuum cleaner 1 is pneumatically connected to the tool 2 by means of the tube or hose 3, in order to draw at least part of the dust generated during operation of the tool 2 from the working area into a dust collection container 7 of the vacuum cleaner 1. To this end the vacuum cleaner 1 is equipped with a motor 8, which activates a turbine creating a low pressure (below the ambient pressure) in the dust collection container 7. Due to the low pressure in the dust collection container 7 the dust laden air is drawn from the working area along the tube or hose 3 and through one or more filter elements 9 of the vacuum cleaner 1. When passing through the one or more filter elements 9, the dust is withheld on that side of the at least one filter element 9, which faces the dust collection container 7. After passing through the filter elements 9 the air is clean and free of dust. The filtered air is discharged from the vacuum cleaner 1 into the environment through an air discharge 10. The direction of the air stream within the vacuum cleaner 1 during its normal operation is indicated with arrows 11 in figure 1.

It is understood that figure 1 shows the features of the vacuum cleaner 1 and the tool 2 only schematically and in a simplified manner in order to facilitate better understanding of the backgrounds of the invention.

From time to time the at least one filter element 9 can be cleaned by reversing the direction of the air stream 11 through the at least one filter element 9. Hence, clean air is blown back through the at least one filter element 9 into the dust collection container 7. Thereby, dust and other particles adhering to the at least one filter element 9 on the side facing the dust collection container 7 is detached from and blown off the filter element 9 and collected in the dust collection container 7. In order to maintain normal suction operation of the vacuum cleaner 1 during the filter cleaning process, the vacuum cleaner 1 preferably comprises at least two independent filter elements 9. The air streams 11 through the filter elements 9 can be individually controlled. The cleaning process is performed on one of the filter elements 9 at a time (inversion of the air stream 11), wherein normal operation of the vacuum cleaner 1 is maintained through the other filter element 9 (normal air stream 11). After having cleaned the first filter element 9, the other filter element 9 is cleaned by reversing the air stream 11 through that filter element 9, wherein the normal operation of the vacuum cleaner 1 is maintained through the first filter element 9. A vacuum cleaner with such a filter cleaning process is well-known in the prior art and disclosed, for example, in EP 1 997 415 B1. The filter cleaning process can be initiated, controlled and terminated by switching appropriate electrically actuated pneumatic valves 12 in order to control the direction of the air stream 11 through the filter elements 9, in particular in order to temporarily reverse the air stream 11.

The vacuum cleaner 1 operates under certain operation parameters when it is turned on. The operation parameters can comprise a speed at which the motor 8 of the vacuum cleaner 1 is running. Depending on the motor speed a corresponding volume per time unit of dust laden air is drawn from the working area through the pipe or hose 3 into the dust collection container 7. Other operation parameters are, for example, an amount of air allowed to exit the vacuum cleaner on the turbine's outlet (dynamic pressure) side, or an amount of dust impinging the one or more filter elements 9, and/or the frequency and duration of the temporary filter cleaning process. Of course, other operation parameters of the vacuum cleaner may exist, too.

The values of the operation parameters of the vacuum cleaner 1 can be predefined prior to shipment and use of the vacuum cleaner 1 (leaving the user only the choice of turning the vacuum cleaner 1 on or off) or can be manually set by a user by means of a user interface of the vacuum cleaner 1 (giving the user the possibility to turn the vacuum cleaner 1 on or off and controlling the speed of the motor 8). Besides, the values of the operation parameters can be calculated and updated during normal operation of the vacuum cleaner 1 based on certain characteristics of the vacuum cleaner 1 and/or the environment. These characteristics could comprise, for example, a pressure difference on opposing sides of the filter elements 9 or an ambient temperature or an ambient humidity value.

According to the present invention the vacuum cleaner 1 further comprises reception means 13 for receiving information regarding characteristics of the tool 2 and/or its current use. The reception means 13 are adapted to receive the information via a data communication link 14 established between the tool 2 and the vacuum cleaner 1. The link 14 can comprise one or more electric cables. Depending on the type of link 14, the reception means 13 have to be embodied accordingly, in order to correctly receive the information regarding the tool 2 and/or its use.

Furthermore, the vacuum cleaner 1 comprises processing and calculation means 15 for processing the received information and for calculating a correction signal 16 for at least one of the operation parameters of the vacuum cleaner 1 based on the received information. Further, the vacuum cleaner 1 comprises adjustment means 17 for adjusting a value of at least one operation parameter and for calculating a corrected or updated operation signal 18, 18' based on the calculated correction signal 16. In order to influence the operation condition of the vacuum cleaner 1 those entities of the vacuum cleaner 1 are provided with the corrected operation signal 18, 18', which are responsive to the signal 18, 18' and vary the respective operation parameter. For example, a corrected operation signal 18 can be provided to the motor 8 of the vacuum cleaner 1 in order to adjust the motor speed based on the calculated correction signal 16. Additionally or alternatively, a corrected operation signal 18' could be provided to one or more pneumatic valves 12 for initiating, controlling and terminating the filter cleaning process, thereby adjusting the frequency of the filter cleaning process based on the calculated correction signal 16. Of course, it would be possible to provide alternative or additional corrected operation signals to other entities of the vacuum cleaner 1. By providing the corrected operation signals 18, 18' and other possible corrected operation signals to the entities the vacuum cleaner's air flow can be adjusted, i.e. the volume of the aspired dust laden air per time unit is varied in order to fulfill the applicable standards and regulations in terms of approved dust concentration in the air surrounding the tool 2.

The vacuum cleaner 1 can comprise a microprocessor, on which a computer program is executable. The computer program can be programmed in order to perform the processing of the received information and the calculation of the correction signal 16. The program can also be programmed in order to adjust the at least one operation parameter and update the operation signal(s) 18, 18' based on the correction signal 16. The reception means 13 can comprise a receiver or a transceiver, which provides the microprocessor with the information received from the tool 2.

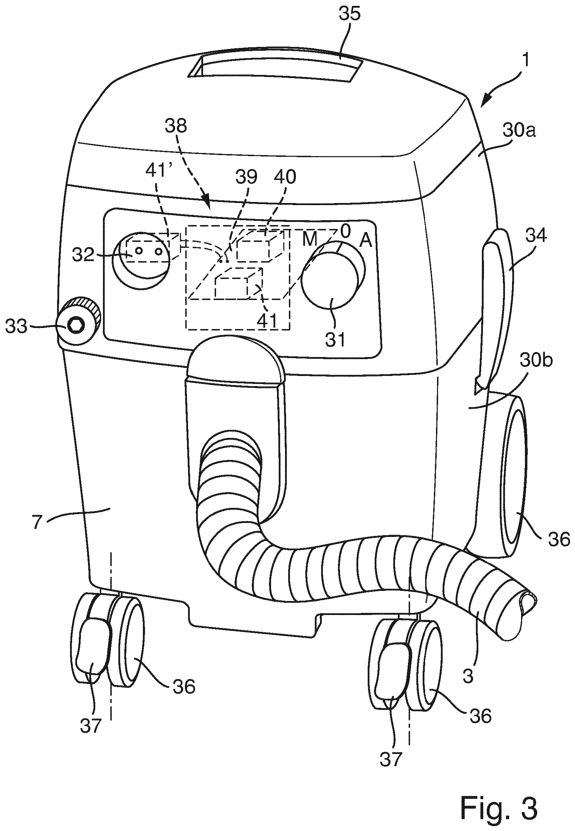

In figure 1 the vacuum cleaner 1 as well as the electrical machine tool 2 are provided with separate electric power lines 19, 20 connected to a separate power supply 21 each, for providing the vacuum cleaner 1 and the tool 2 with the electric power necessary for their operation. According to an embodiment of the invention shown in figure 2, the electric power line 20 of the tool 2 is not directly connected to the power supply 21. Rather, the tool's power line 20 is connected to an appropriate socket 32 (see figure 3) of the vacuum cleaner 1. The tool 2 receives the electrical power necessary for its operation via the vacuum cleaner 1 and its electric power line 19. This embodiment has the advantage that activation the tool 2 can be detected in the vacuum cleaner 1 by appropriate current sensing means and that the vacuum cleaner 1 can be automatically started upon detection of an activation of tool 2.

In the embodiment of figure 2 the reception means 13 are adapted to receive the information regarding characteristics of the tool 2 and/or its current use via the power line 20 by means of a power line communication (PLC) between the tool 2 and the vacuum cleaner 1. This has the advantage that no additional cables have to be provided between the tool 2 and the vacuum cleaner 1 for the data communication link 14. Of course, in this case the reception means 13 would have to differentiate and separate the received information from the electric power signal transmitted to the tool 2.

Data transmission via PLC is well-known in the field of the automation of buildings and in the field of automobiles. However, to the inventor's knowledge PLC has never before been used in the field of power tools, for example hand held or hand guided machine tools, and vacuum cleaners. In particular, PLC has never before been used for transmitting information regarding characteristics of a power tool 2 and/or its current use to a vacuum cleaner 1 in order to adjust and optimize its suction power, in particular for fulfilling the applicable standards and regulations in terms of approved dust concentration in the air surrounding the tool 2. The use of PLC for transmitting information between the tool 2 and the vacuum cleaner 1 is particularly advantageous because the vacuum cleaner 1 as well as the tool 2 are externally identical to conventional vacuum cleaners and tools and are used and operated in just the same way as conventional vacuum cleaners and tools.

By plugging the tool's electric power line 20 into the appropriate socket 32 of the vacuum cleaner 1 an electric power supply for the tool 2 is realized and at the same time the data communication link 14 is established between the vacuum cleaner 1 and the tool 2 without the user even noticing. Hence, the transmission of information regarding characteristics of the tool 2 and its current use as well as the reception and processing of the received information, calculation of the correction signal 16 and adjustment of the at least one operation parameter at the vacuum cleaner 1 are fully transparent for the user. Furthermore, using the power line 20 as data communication link 14 has the advantage that an operating error of the information transmission between the tool 2 and the vacuum cleaner 1 by the user is prevented. Establishing the communication link 14 is straightforward for the user and effected automatically when connecting the tool 2 with the electric power line 20 to the vacuum cleaner 1 for electric power supply.

Furthermore, the vacuum cleaner 1 according to the present invention will work correctly in combination with a conventional tool 2, which does not transmit any information regarding its characteristics and/or its current use. The vacuum cleaner 1 and the reception means 13, respectively, simply receive no information. Hence, the processing and calculation means 15 cannot calculate a correction signal and the adjustment means 17 cannot perform any adjustment of the at least one operation parameter. The operation signal(s) 18, 18' simply remain as manually set by the user or as automatically set based on certain characteristics of the vacuum cleaner 1 and/or the environment. With other words, the vacuum cleaner 1 according to the present invention would work like a conventional vacuum cleaner together with a conventional tool, if no information regarding the characteristics of the tool or its current use is transmitted to the vacuum cleaner 1.

Just the same, the tool 2 according to the present invention will work correctly in combination with a conventional vacuum cleaner, which is not adapted to receive information regarding a tool's characteristics and/or its current use. Hence, the conventional vacuum cleaner has no reception means 13, no processing and calculation means 15 and no adjustment means 17. The information regarding the tool's characteristics and/or its current use transmitted by the tool 2 across the data communication line 14 is simply not received and processed by a conventional vacuum cleaner. The operation signal(s) 18, 18' for the vacuum cleaner are not corrected or updated and simply remain as manually set by the user or as automatically set based on certain characteristics of the vacuum cleaner and/or the environment.

The information regarding the characteristics of the tool 2 and/or its current use, which is transmitted by the tool 2 across the data communication link 14 and received by the reception means 13 of the vacuum cleaner 1 may comprise one or more of the following:
a unique identification of the manufacturer of the tool 2 and/or the type of tool 2,
a maximum speed the motor of the tool 2 can reach,
a current speed of the motor of the tool 2,
a maximum amount of dust per time unit, which the tool 2 can generate,
an amount of dust per time unit currently generated by the tool 2,
type and characteristics of a currently mounted working element 4 of the tool 2,
type and characteristics of a workpiece or a workpiece's surface currently worked by the tool 2 and its working element 4, respectively, and
a minimum volume per time unit of drawn dust laden air necessary for drawing a predefined amount of dust per time unit generated by the tool 2.

The minimum volume per time unit of drawn dust laden air necessary for drawing a predefined amount of the dust currently generated by the tool 2 can be determined beforehand prior to shipment and use of the tool 2. With other words: The tool 2 generates a predefined amount of dust per time unit during operation. Part of the dust is gathered on the working surface and another part of the dust hovers around in the air surrounding the working area. In order to keep the working area for the most part free of dust and in order to reduce the dust concentration in the air surrounding the working area, a value for the minimum volume of air to be aspired by the vacuum cleaner 1 can be determined in order to achieve these objectives. The correction signal 16 and/or the operation signal(s) 18, 18' are calculated accordingly in order to operate the vacuum cleaner 1 in the desired manner.

The unique identification of the manufacturer of the tool 2 or the type of tool 2 can be generated and stored in an appropriate storage device of the tool 2 after manufacturing and prior to shipment and use of the tool 2. The same applies to the maximum speed of a motor 8 of the tool 2, the maximum amount of dust per time unit the tool 2 can generate and other electrical and/or mechanical characteristics of the tool 2. The current speed of the motor 8 of the tool 2 can be determined by appropriate sensor devices (e.g. a Hall-Effect sensor, a magnetic sensor, an optical sensor, etc.) located in the tool 2. The amount of dust per time unit currently generated by the tool 2 during operation can also be determined by appropriate sensor devices (e.g. an optical sensor, etc.) located in the dust extraction device 5 and/or the connection element 6 of the tool 2.

In order to allow the reception means 13 of the vacuum cleaner 1 to actually receive information regarding the tool 2 and/or its current use, it is necessary that the tool 2 is provided with respective transmission means 22, which are adapted for transmitting the information regarding the characteristics of the tool 2 and/or its current use via the data connection link 14. If the data communication link 14 provides for a data transmission via a power line communications (PLC), the transmission means 22 have to be adapted to transmit the information via the power line 20 by means of a PLC.

Figure 3 shows an example of the vacuum cleaner 1 for use in the present invention. The vacuum cleaner 1 comprises an essentially two-part casing with an upper part 30a and a lower part 30b. The lower part 30b of the casing comprises the dust collecting container 7 for receiving and storing dust and other particles which have been aspired by the vacuum cleaner 1. The top part 30a of the casing comprises among others the motor 8 (not shown in figure 3) and the turbine for creating a low pressure (i.e. a pressure below the ambient pressure) in the container 7 and for making the vacuum cleaner 1 aspire dust and the like. Furthermore, the top part 30a of the casing may comprise one or more air filters 9 and a user interface 31 for the operational control of the vacuum cleaner 1. The user interface 31 in particular comprises a control switch adapted for turning on and off the vacuum cleaner 1, for switching between automatic and manual operational mode and/or for speed control (e.g. manual adjustment of a set value for a closed-loop speed control) of the motor 8.

In the automatic mode a plug of the electrical power supply line 20 (see figure 2) of an electric tool 2 is inserted into power socket 32 of the vacuum cleaner 1. The vacuum cleaner 1 for its part is connected to an electrical power supply 21 by means of the power supply line 19 (not shown in figure 3) for providing the vacuum cleaner 1 as well as the tool 2 with electrical power. If the tool 2 is turned on the vacuum cleaner 1 is automatically activated, too, whereby the electrical power for the tool 2 is provided via the vacuum cleaner 1.

The vacuum cleaner 1 also has an air socket 33 for connecting a pneumatic tube of a pneumatically driven tool to the vacuum cleaner 1. The vacuum cleaner 1 for his part is connected to the electrical power supply 21 for providing the vacuum cleaner 1 with electrical energy. Additionally, the vacuum cleaner 1 is connected to a compressed air supply (not shown in figure 3) for providing the pneumatic tool with compressed air. If the tool is turned on, compressed air is provided to the tool via the air socket 33, and the vacuum cleaner 1 is automatically turned on synchronously to the activation of the tool. Furthermore, it is possible to drive the vacuum cleaner 1 or its motor 8, respectively, with compressed air, too, instead of electrical power. In that case the tool as well as the vacuum cleaner 1 would be driven by compressed air.

The top part 30a of the casing is releasably connected to the bottom part 30b by means of vice action latches 34 located at opposite sides of the casing 30a, 30b. The top part 30a of the casing is provided with a handle 35 for conveniently carrying the vacuum cleaner 1 to its designated site of operation. The bottom part 30b of the casing is provided with wheels 36 so the vacuum cleaner 1 can be conveniently rolled from one position to another. Preferably, the front wheels 36 are pivotable about an essentially vertical pivoting axis, in order to allow easy maneuvering of the vacuum cleaner 1, and comprise braking means 37 for temporarily securing the position of the vacuum cleaner 1 in the desired site of operation. Hence, the vacuum cleaner 1 is a mobile unit which can easily be moved to a desired site of operation. Of course, the present invention could also be applied to fixed or stationary vacuum cleaner installations used in factories, garages, shipyards or the like.

The vacuum cleaner 1 is adapted for connection to a power tool, such as hand held and/or hand guided tool 2, generating dust during its operation, which will be gathered on the surface of the workpiece and/or randomly distributed in the air surrounding the tool 2. The vacuum cleaner 1 is pneumatically connected to the tool 2 by means of the aspiration hose 3, one end of which is inserted into an inlet opening located at the bottom part 30b of the casing of the vacuum cleaner 1 and opening into the dust collection container 7. The opposite end of the hose 3 is connected to the dust extraction device 5 via the dust duct 6 (see figures 1 and 2) of the tool 2. The vacuum cleaner 1 serves for aspiring dust generated during operation of the tool 2. Preferably, operation of the vacuum cleaner 1 is automatically started upon activation of the tool 2 and automatically stopped after deactivation of the tool 2. To this end the vacuum cleaner 1 is provided with means for detecting whether or not electric or pneumatic power is drawn by the tool 2.

An internal control unit 38 can be located within the upper part 30a of the casing. The control unit 38 can comprise a printed circuit board 39 with a number of electrical and electronic components located thereon and electrically connected via the circuit paths located on the printed circuit board 39. The components can comprise, for example, a microprocessor 40 with an internal and/or external storage device, and a data communication interface 41. A computer program can be executed on the microprocessor 40. The computer program is programmed as to provide for the control of the operation of the vacuum cleaner 1 in the desired manner if the program is executed on the processor 40. For example, the computer program can provide for a closed loop control of the speed of the motor 8 based on the desired motor speed and/or aspiration air flow set by the user by means of the user interface 31.

The reception means 13 can be realized by the data communication interface 41 located anywhere in the upper part 30a of the casing. If the information transmission between the tool 2 and the vacuum cleaner 1 is effected by means of a PLC, the receptions means 13 can be realized by the communication interface 41' located near the power socket 32, in which the power line 20 from the tool 2 is plugged. The functionality of the processing and calculation means 15 as well as of the adjustment means 17 can be realized by a separate computer program, which can also be executed on the microprocessor 40, or by an additional part of the computer program provided for controlling operation of the vacuum cleaner 1. The separate computer program or the additional part of the existing computer program is programmed as to provide for the automatic control and correction of the at least one operation parameter of the vacuum cleaner 1, if the program is executed on the processor 40.

The present invention has the advantage that the air flow of the vacuum cleaner 1 can be automatically adjusted during operation of the vacuum cleaner 1, in order to fulfil the requirements of the applicable regulations and standards regarding the concentration of dust in the air surrounding the tool 2. At the same time the invention also provides for a reduction of the energy consumption of the vacuum cleaner 1 as well as for an easy use of the tool 2 when pneumatically attached to the vacuum cleaner 1. In particular, the vacuum (or low pressure) created between the working element 4 and the working surface of the workpiece can be reduced thereby avoiding that the working element 4 is sucked against the working surface from time to time. Furthermore, the received information or part of it can be used for initiating an alarm, if the vacuum cleaner's air flow falls below a given threshold value. In particular, depending on the received information or part of it the threshold value for triggering the alarm can be adapted to the type of tool 2 and its current use and, hence, to the actual air flow currently required by the tool 2 in order to aspirate a required or desired amount of dust.

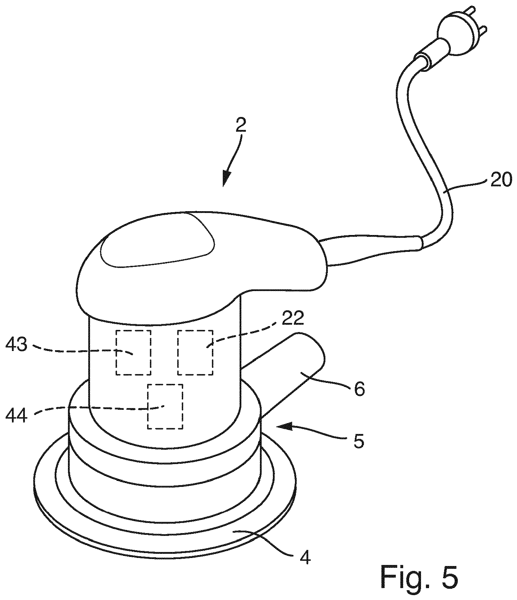

Figure 5 shows an embodiment of a power tool for use in the present invention. In this example power tool is embodied as a hand guided and/or hand held machine tool 2 driven electrically by means of electrical power drawn over power line 20 from a power socket 21 (not shown). Of course, the tool 2 could also be a stationary power tool and/or operated pneumatically if desired. In case of a pneumatic operation of the tool 2 it would be connected to a compressed air supply via a pneumatic tube. The compressed air drawn from the pneumatic source would drive a pneumatic motor located in the tool 2. In case of an electric tool 2, the transmission means 22 can be adapted to provide for a transmission via an electric cable, for example the power line 20 by means of a power line communication. In the case of a pneumatic tool 2 the information transmission between the tool 2 and the vacuum cleaner 1 can be performed by means of a separate cable extending between the tool's transmission means 22 and the vacuum cleaner's reception means 13. The cable could be an integral part or attached to the pneumatic tube. The pneumatic tube connected to the tool 2 could also be attached to the vacuum cleaner 1 allowing automatic activation of the vacuum cleaner 1 as soon as the pneumatic tool 2 is activated. Of course, in that case the vacuum cleaner 1 would have to be connected to a pneumatic source. Connecting the pneumatic tube to the tool 2 and the vacuum cleaner 1 could automatically establish the electric connection between the electric cable and the transmission means 22 and the reception means 13, respectively. In order to provide for an electric power supply of the control unit and/or the transmission means 22 of a pneumatic tool 2 a battery or a pneumatically activated dynamo could be provided in the tool 2. Alternatively, additionally to the pneumatic tube attached to the pneumatic tool 2 an electric cable could be provided between the tool 2 and the vacuum cleaner 1, which could also be used for information transmission between the tool 2 and the vacuum cleaner 1.

The information regarding the characteristics of the tool 2 and/or its current or intended use can be predefined and stored in an appropriate storage element 43 located in the tool 2 beforehand prior to shipment and use of the tool 2. The information stored in the storage element 43 could comprise, for example, a unique identification of the tool or its manufacturer, electric or mechanic characteristics of the tool 2, like the tool's maximum motor speed, a maximum amount of dust per time unit the tool 2 can generate, type and characteristics of a working element 4 the tool 2 is designed for, type and characteristics of a workpiece or a workpiece's surface the tool 2 is designed for and/or a minimum volume per time unit (e.g. I/sec) dust laden air to be drawn from the tool 2 in order to fulfil the applicable regulations and/or standards in terms of approved dust concentration in the air surrounding the tool 2.

Alternatively or additionally, the tool 2 can be provided with one or more sensor elements 44 located within the tool 2 for determining current dynamic characteristics of the tool 2 and/or its current use. The one or more sensor devices 44 can determine, for example, the current speed of the tool's motor 8, the current amount of dust per time unit generated by the tool 2, the electric current currently drawn by the tool 2 and/or the mechanical pressure with which the tool 2 is currently pressed onto the surface of the workpiece. The sensor devices 44 possibly used in the tool 2 for determining characteristics of the tool 2 and/or its current use may comprise optical sensors, electromagnetic sensors, Hall-Effect sensors, capacitive sensors or the like. The current values of the tool's characteristics determined by the at least one sensor device 44 can be processed and forwarded to the transmission means 22 for transmission to the vacuum cleaner 1 via the data communication link 14.

Information transmission across the data communication link 14 can be realized in any desired format. For example, the information can be transmitted by means of an analogue or a digital signal. The current value of the analogue signal is indicative of the current condition of the monitored characteristic of the tool 2 or its current use. The digital signal may comprise data packets with a length of one or more bits. The data packets may have a header section preceding the payload section. Further, the data packets can comprise an end of packet tag after the payload section. The header may contain additional data allowing the recognition of transmission errors, e.g. a check-sum for a CRC or a hash-value. The payload of the data packets is indicative of the current value of the monitored characteristic(s) of the tool 2 and/or its current use. A data packet may comprise more than one value of a certain characteristic or values of more than one monitored characteristic of the tool 2 and/or its current use.

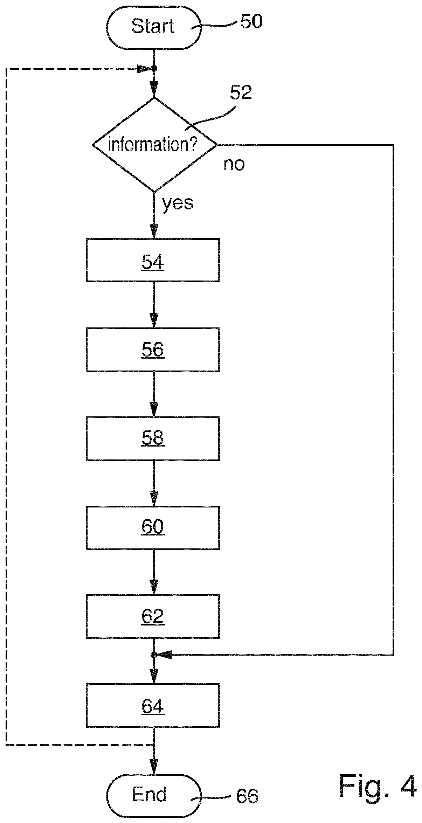

Figure 4 shows a flow chart of a preferred embodiment of a method for adjusting operation parameters of a vacuum cleaner 1. The method is directed to controlling the operation parameters under which a vacuum cleaner 1 is operated if it is turned on. The vacuum cleaner 1 is adapted for pneumatic connection to a hand held or hand guided tool 2 generating dust during its operation, in order to draw at least part of the dust away from the tool 2 and the working area, respectively, into the vacuum cleaner 1.

The method starts at functional block 50. Then, at functional block 52 it is interrogated whether information regarding the characteristics of a tool 2 and/or its current use can be received by the reception means 13 of the vacuum cleaner 1. If such information can be received ("yes"), it is received in functional block 54 and then forwarded to the processing and calculation means 15. In functional block 56 the processing and calculation means 15 process the received information and calculate the correction signal 16 for the at least one operation parameter of the vacuum cleaner 1 based on the received information. In functional block 58 the correction signal 16 is forwarded to the adjustment means 17, which in functional block 60 perform correction the operation signal designated for one or more entities 8, 12 of the vacuum cleaner 1, in order to operate the vacuum cleaner 1 under the at least one corrected operation parameter with the at least one corrected operation signal 18, 18'. In functional block 62 the corrected operation signal 18, 18' is forwarded to the entities 8, 12 of the vacuum cleaner 1. For example, if the corrected operation signal is provided to a control unit, like control unit 38, for controlling the speed of the motor 8, the motor speed can be adapted depending on the received information. For example, if the corrected operation signal 18, 18' is provided to a control unit, like control unit 38, for controlling the filter cleaning process, the frequency of the filter cleaning process can be adapted based on the received information. The operation of the vacuum cleaner 1 with the adapted operation parameter (s) is indicated by functional block 64. Finally, the method ends in functional block 66.

If in functional block 52 it is determined that there is no information to be received by the reception means 13 ("no"), the method jumps directly to functional block 64. In that case the vacuum cleaner 1 is operated in a conventional manner based on the non-corrected operation parameters. In this case the vacuum cleaner 1 operates just the same way as a conventional vacuum cleaner would operate.

It is possible that after functional block 64 the method goes back to functional block 52 and runs through the steps 52 to 64 once more in order to provide for a continuous adaptation of the operation parameters of the vacuum cleaner 1 depending on the current value of the received information and the characteristics of the tool 2 and/or its current use, respectively.

## Claims

1. A combination of a vacuum cleaner (1) and a power tool (2) generating dust during its operation, the vacuum cleaner (1) adapted for pneumatic connection to the power tool (2), in order to draw at least part of the dust away from the tool (2) into the vacuum cleaner (1), the vacuum cleaner (1) operating under certain operation parameters when it is turned on,
the vacuum cleaner (1) comprising a motor (8), the motor's speed being one of the operation parameters, and
the vacuum cleaner (1) comprising at least one filter element (9), which is automatically cleaned from time to time during a filter cleaning process by inverting the air flow (11) through the at least one filter element (9), a frequency of the filter cleaning process being one of the operation parameters,
the vacuum cleaner (1) comprising
- reception means (13; 41, 41') for receiving information regarding characteristics of the tool (2) and/or its current use from transmission means (22) of the tool (2), the information comprising at least one of a group consisting of
- a unique identification of the manufacturer of the tool (2) and/or the type of tool (2),
- a maximum speed a motor of the tool (2) can reach,
- a current speed of the motor of the tool (2),
- a maximum amount of dust per time unit the tool (2) can generate,
- an amount of dust per time unit currently generated by the tool (2),
- type or age of a currently mounted working element (4) of the tool (2),
- characteristics regarding a workpiece or a workpiece's working surface currently worked by the tool (2), and
- a minimum value for a volume of aspired dust laden air per time unit necessary for drawing a predefined amount of the dust generated by the tool (2),
- processing and calculation means (15) for processing the received information and for calculating a correction signal (16) for at least one of the vacuum cleaner's operation parameters based on the received information, the correction signal (16) being used for updating the value of at least one of the operation parameters of the vacuum cleaner (1), and
- adjustment means (17) for adjusting the at least one operation parameter based on the calculated correction signal (16),
**characterized in that** the vacuum cleaner (1) has electric connection means (32) for connecting the tool (2) to the vacuum cleaner (1) by means of an electric power line (20) providing the tool (2) with the electric power necessary for its operation, wherein the reception means (13; 41, 41') are adapted to receive the information from the tool (2) via the power line (20) by means of a power line communication between the tool (2) and the vacuum cleaner (1).

2. The combination of the vacuum cleaner (1) and the power tool (2) according to claim 1, **characterized in that** the motor (8) of the vacuum cleaner (1) is adapted to run at a certain speed when turned on and drawing a corresponding volume per time unit of dust laden air, wherein the processing and calculation means (15) are adapted to calculate the correction signal (16) for the speed of the motor (8) of the vacuum cleaner (1), and wherein the adjustment means (17) are adapted to adjust the motor speed based on the calculated correction signal (16).

3. The combination of the vacuum cleaner (1) and the power tool (2) according to claim 1 or 2, **characterized in that** the processing and calculation means (15) are adapted to calculate a correction signal (16) for the frequency of the filter cleaning process, and wherein the adjustment means (17) are adapted to adjust the frequency of the filter cleaning process based on the calculated correction signal (16).

4. The combination of the vacuum cleaner (1) and the power tool (2) according to one of the preceding claims, **characterized in that** the processing and calculation means (15) comprise a microprocessor (40), which is adapted to execute a computer program programmed in order to process the received information and to calculate the correction signal (16) based on the received information.

5. The combination of the vacuum cleaner (1) and the power tool (2) according to one of the preceding claims, **characterized in that** the vacuum cleaner (1) comprises storage means, in which a look-up table is stored before operation of the vacuum cleaner (1), the look-up table comprising additional information for a plurality of power tools (2), the processing and calculation means (15) being adapted to retrieve the stored additional information by means of the information received by the reception means (13; 41, 41').

6. The combination of the vacuum cleaner (1) and the power tool (2) according to one of the preceding claims, **characterized in that** the vacuum cleaner (1) comprises storage means, in which the information received by the reception means (13; 41, 41') and/or the at least one value of the correction signal (16) calculated by the processing and calculation means (15) are stored for future operation of the vacuum cleaner (1).

7. The combination of the vacuum cleaner (1) and the power tool (2) according to one of the preceding claims, **characterized in that** the processing and calculation means (15) are adapted to calculate the correction signal (16) also based on information regarding characteristics of the vacuum cleaner (1) and/or its current use comprising at least one of a group consisting of
- filling level of a dust container (7) of the vacuum cleaner (1),
- degree of loading of at least one filter element (9) of the vacuum cleaner (1),
- absolute pressure values before and/or after at least one filter element (9) of the vacuum cleaner (1),
- a difference of the pressure values before and after at least one filter element (9) of the vacuum cleaner (1),
- a time period of use since emptying a dust container (7) of the vacuum cleaner (1) the last time,
- a time period of use since running through a filter cleaning process the last time,
- a temperature of the motor (8) of the vacuum cleaner (1), and
- environmental parameters like dust concentration in the air surrounding the vacuum cleaner (1), temperature or humidity outside the vacuum cleaner (1).

## Patentansprüche

1. Kombination aus einem Staubsauger (1) und einem Elektrowerkzeug (2), das während seines Betriebs Staub erzeugt, wobei der Staubsauger (1) für eine pneumatische Verbindung mit dem Elektrowerkzeug (2) ausgelegt ist, um zumindest einen Teil des Staubs von dem Werkzeug (2) in den Staubsauger (1) zu saugen, wobei der Staubsauger (1) unter bestimmten Betriebsparametern arbeitet, wenn er eingeschaltet ist,
wobei der Staubsauger (1) einen Motor (8) umfasst, wobei die Drehzahl des Motors einer der Betriebsparameter ist, und
wobei der Staubsauger (1) mindestens ein Filterelement (9) umfasst, das von Zeit zu Zeit während eines Filterreinigungsprozesses automatisch gereinigt wird, indem der Luftstrom (11) durch das mindestens eine Filterelement (9) umgekehrt wird, wobei eine Frequenz des Filterreinigungsprozesses einer der Betriebsparameter ist,
wobei der Staubsauger (1) umfasst
- eine Empfangseinrichtung (13; 41, 41') zum Empfangen von Informationen bezüglich Eigenschaften des Werkzeugs (2) und/oder seiner aktuellen Verwendung von einer Übertragungseinrichtung (22) des Werkzeugs (2), wobei die Informationen mindestens eine aus einer Gruppe umfassen, die besteht aus
- einer eindeutigen Identifikation des Herstellers des Werkzeugs (2) und/oder des Typs des Werkzeugs (2),
- eine maximale Drehzahl, die ein Motor des Werkzeugs (2) erreichen kann,
- eine aktuelle Drehzahl des Motors des Werkzeugs (2),
- eine maximale Staubmenge pro Zeiteinheit, die das Werkzeug (2) erzeugen kann,
- eine aktuell vom Werkzeug (2) erzeugte Staubmenge pro Zeiteinheit,
- Typ oder Alter eines aktuell montierten Arbeitselements (4) des Werkzeugs (2),
- Eigenschaften betreffend ein Werkstück oder einer Arbeitsfläche des Werkstücks, das aktuell von dem Werkzeug (2) bearbeitet wird, und
- einen Mindestwert für ein Volumen an angesaugter staubbeladener Luft pro Zeiteinheit, das notwendig ist, um eine vordefinierte Menge des vom Werkzeug (2) erzeugten Staubs abzusaugen,
- eine Verarbeitungs- und Berechnungseinrichtung (15) zum Verarbeiten der empfangenen Informationen und zum Berechnen eines Korrektursignals (16) für mindestens einen der Betriebsparameter des Staubsaugers auf der Grundlage der empfangenen Informationen, wobei das Korrektursignal (16) zum Aktualisieren des Wertes von mindestens einem der Betriebsparameter des Staubsaugers (1) verwendet wird, und
- Einstellmittel (17) zum Einstellen des mindestens einen Betriebsparameters auf der Grundlage des berechneten Korrektursignals (16),
**dadurch gekennzeichnet, dass** der Staubsauger (1) elektrische Verbindungsmittel (32) zum Verbinden des Werkzeugs (2) mit dem Staubsauger (1) mittels einer elektrischen Stromleitung (20) aufweist, die das Werkzeug (2) mit der für seinen Betrieb erforderlichen elektrischen Leistung versorgt, wobei die Empfangseinrichtung (13; 41, 41') dazu ausgebildet ist, die Informationen von dem Werkzeug (2) über die Stromleitung (20) mittels einer Power-Line-Communication zwischen dem Werkzeug (2) und dem Staubsauger (1) zu empfangen.

2. Kombination aus dem Staubsauger (1) und dem Elektrowerkzeug (2) nach Anspruch 1, **dadurch gekennzeichnet, dass** der Motor (8) des Staubsaugers (1) ausgebildet ist, mit einer bestimmten Geschwindigkeit zu laufen, wenn er eingeschaltet wird, und ein entsprechendes Volumen an staubbeladener Luft pro Zeiteinheit ansaugt, wobei die Verarbeitungs- und Berechnungseinrichtung (15) ausgebildet ist, das Korrektursignal (16) für die Geschwindigkeit des Motors (8) des Staubsaugers (1) zu berechnen, und wobei die Einstellmittel (17) ausgebildet sind, die Motordrehzahl auf der Grundlage des berechneten Korrektursignals (16) einzustellen.

3. Kombination aus dem Staubsauger (1) und dem Elektrowerkzeug (2) nach Anspruch 1 oder 2, **dadurch gekennzeichnet, dass** die Verarbeitungs- und Berechnungseinrichtung (15) ausgebildet ist, ein Korrektursignal (16) für die Häufigkeit des Filterreinigungsprozesses zu berechnen, und wobei die Einstellmittel (17) ausgebildet sind, die Häufigkeit des Filterreinigungsprozesses auf der Grundlage des berechneten Korrektursignals (16) einzustellen.

4. Kombination aus dem Staubsauger (1) und dem Elektrowerkzeug (2) nach einem der vorhergehenden Ansprüche, **dadurch gekennzeichnet, dass** die Verarbeitungs- und Berechnungseinrichtung (15) einen Mikroprozessor (40) umfasst, der ausgebildet ist, ein Computerprogramm auszuführen, das programmiert ist, die empfangenen Informationen zu verarbeiten und das Korrektursignal (16) auf der Grundlage der empfangenen Informationen zu berechnen.

5. Kombination aus dem Staubsauger (1) und dem Elektrowerkzeug (2) nach einem der vorhergehenden Ansprüche, **dadurch gekennzeichnet, dass** der Staubsauger (1) Speichermittel umfasst, in denen vor dem Betrieb des Staubsaugers (1) eine Lookup-Tabelle gespeichert ist, wobei die Lookup-Tabelle zusätzliche Informationen für eine Vielzahl von Elektrowerkzeugen (2) umfasst, wobei die Verarbeitungs- und Berechnungseinrichtung (15) ausgebildet ist, die gespeicherten zusätzlichen Informationen aufgrund der von der Empfangseinrichtung (13; 41, 41') empfangenen Informationen abzurufen.

6. Kombination aus dem Staubsauger (1) und dem Elektrowerkzeug (2) nach einem der vorhergehenden Ansprüche, **dadurch gekennzeichnet, dass** der Staubsauger (1) Speichermittel umfasst, in denen die von der Empfangseinrichtung (13; 41, 41') empfangenen Informationen und/oder der mindestens eine von der Verarbeitungs- und Berechnungseinrichtung (15) berechnete Wert des Korrektursignals (16) für einen zukünftigen Betrieb des Staubsaugers (1) gespeichert werden.

7. Kombination aus dem Staubsauger (1) und dem Elektrowerkzeug (2) nach einem der vorhergehenden Ansprüche, **dadurch gekennzeichnet, dass** die Verarbeitungs- und Berechnungseinrichtung (15) ausgebildet ist, das Korrektursignal (16) auch auf der Grundlage von Informationen bezüglich der Eigenschaften des Staubsaugers (1) und/oder dessen aktueller Verwendung zu berechnen, die mindestens eine aus der folgenden Gruppen umfassen
- Füllstand eines Staubbehälters (7) des Staubsaugers (1),
- Beladungsgrad mindestens eines Filterelements (9) des Staubsaugers (1),
- absolute Druckwerte vor und/oder nach dem mindestens einen Filterelement (9) des Staubsaugers (1),
- eine Differenz der Druckwerte vor und nach mindestens einem Filterelement (9) des Staubsaugers (1),
- eine Nutzungsdauer seit der letzten Entleerung eines Staubbehälters (7) des Staubsaugers (1),
- eine Nutzungsdauer seit dem letzten Durchlaufen eines Filterreinigungsprozesses,
- eine Temperatur des Motors (8) des Staubsaugers (1), und
- Umgebungsparameter wie Staubkonzentration in der den Staubsauger (1) umgebenden Luft, Temperatur oder Feuchtigkeit außerhalb des Staubsaugers (1).

## Revendications

1. Combinaison d'un aspirateur (1) et d'un outil électrique (2) générant de la poussière pendant son fonctionnement, l'aspirateur (1) étant adapté pour être connecté pneumatiquement à l'outil électrique (2), afin d'aspirer au moins une partie de la poussière de l'outil (2) dans l'aspirateur (1), l'aspirateur (1) fonctionnant sous certains paramètres de fonctionnement lorsqu'il est mis en marche,
l'aspirateur (1) comprenant un moteur (8), la vitesse du moteur étant l'un des paramètres de fonctionnement, et
l'aspirateur (1) comprenant au moins un élément filtrant (9), qui est automatiquement nettoyé de temps en temps pendant un processus de nettoyage du filtre en inversant le flux d'air (11) à travers le au moins un élément filtrant (9), une fréquence du processus de nettoyage du filtre étant l'un des paramètres de fonctionnement, l'aspirateur (1) comprenant
- des moyens de réception (13 ; 41, 41') pour recevoir des informations concernant les caractéristiques de l'outil (2) et/ou son utilisation actuelle des moyens de transmission (22) de l'outil (2), les informations comprenant au moins un élément d'un groupe constitué
- une identification unique du fabricant de l'outil (2) et/ou du type d'outil (2),
- une vitesse maximale qu'un moteur de l'outil (2) peut atteindre,
- une vitesse actuelle du moteur de l'outil (2),
- une quantité maximale de poussière par unité de temps que l'outil (2) peut générer,
- une quantité de poussière par unité de temps actuellement générée par l'outil (2),
- le type ou l'âge d'un élément de travail (4) de l'outil (2) actuellement monté,
- des caractéristiques concernant une pièce de travail ou la surface de travail de la pièce actuellement travaillée par l'outil (2), et
- une valeur minimale pour un volume d'air aspiré chargé de poussière par unité de temps nécessaire pour aspirer une quantité prédéfinie de la poussière générée par l'outil (2),
- des moyens de traitement et de calcul (15) pour traiter les informations reçues et pour calculer un signal de correction (16) pour au moins un des paramètres de fonctionnement de l'aspirateur sur la base des informations reçues, le signal de correction (16) étant utilisé pour mettre à jour la valeur d'au moins un des paramètres de fonctionnement de l'aspirateur (1), et
- des moyens d'ajustement (17) pour ajuster au moins un paramètre de fonctionnement sur la base du signal de correction calculé (16),
**caractérisé en ce que** l'aspirateur (1) comporte des moyens de connexion électrique (32) pour connecter l'outil (2) à l'aspirateur (1) au moyen d'une ligne électrique (20) fournissant à l'outil (2) la puissance électrique nécessaire à son fonctionnement, dans laquelle les moyens de réception (13 ; 41, 41') sont adaptés pour recevoir les informations de l'outil (2) par l'intermédiaire de la ligne électrique (20) au moyen d'une power line communication entre l'outil (2) et l'aspirateur (1).

2. Combinaison de l'aspirateur (1) et de l'outil électrique (2) selon la revendication 1, **caractérisée en ce que** le moteur (8) de l'aspirateur (1) est adapté pour fonctionner à une certaine vitesse lorsqu'il est mis en marche et pour aspirer un volume correspondant par unité de temps d'air chargé de poussière, dans laquelle les moyens de traitement et de calcul (15) sont adaptés pour calculer le signal de correction (16) pour la vitesse du moteur (8) de l'aspirateur (1), et dans laquelle les moyens d'ajustement (17) sont adaptés pour régler la vitesse du moteur sur la base du signal de correction calculé (16).

3. Combinaison de l'aspirateur (1) et de l'outil électrique (2) selon la revendication 1 ou 2, **caractérisée en ce que** les moyens de traitement et de calcul (15) sont adaptés pour calculer un signal de correction (16) pour la fréquence du processus de nettoyage du filtre, et dans laquelle les moyens d'ajustement (17) sont adaptés pour ajuster la fréquence du processus de nettoyage du filtre sur la base du signal de correction calculé (16).

4. La combinaison de l'aspirateur (1) et de l'outil électrique (2) selon l'une des revendications précédentes, **caractérisée en ce que** les moyens de traitement et de calcul (15) comprennent un microprocesseur (40), qui est adapté pour exécuter un programme informatique programmé afin de traiter les informations reçues et de calculer le signal de correction (16) sur la base des informations reçues.

5. La combinaison de l'aspirateur (1) et de l'outil électrique (2) selon l'une des revendications précédentes, **caractérisée en ce que** l'aspirateur (1) comprend des moyens de stockage, dans lesquels une lookup table est stockée avant le fonctionnement de l'aspirateur (1), la lookup table comprenant des informations supplémentaires pour une pluralité d'outils électriques (2), les moyens de traitement et de calcul (15) étant adaptés pour récupérer les informations supplémentaires stockées au moyen des informations reçues par les moyens de réception (13 ; 41, 41').

6. La combinaison de l'aspirateur (1) et de l'outil électrique (2) selon l'une des revendications précédentes, **caractérisée en ce que** l'aspirateur (1) comprend des moyens de stockage, dans lesquels les informations reçues par les moyens de réception (13 ; 41, 41') et/ou la au moins une valeur du signal de correction (16) calculée par les moyens de traitement et de calcul (15) sont stockées pour le fonctionnement futur de l'aspirateur (1).

7. La combinaison de l'aspirateur (1) et de l'outil électrique (2) selon l'une des revendications précédentes, **caractérisée en ce que** les moyens de traitement et de calcul (15) sont adaptés pour calculer le signal de correction (16) également sur la base d'informations concernant les caractéristiques de l'aspirateur (1) et/ou son utilisation actuelle comprenant au moins un élément d'un groupe constitué par
- niveau de remplissage d'un récipient à poussière (7) de l'aspirateur (1),
- degré de charge d'au moins un élément filtrant (9) de l'aspirateur (1),
- les valeurs absolues de pression avant et/ou après au moins un élément filtrant (9) de l'aspirateur (1),
- une différence des valeurs de pression avant et après au moins un élément filtrant (9) de l'aspirateur (1),
- une période d'utilisation depuis la dernière fois où un récipient à poussière (7) de l'aspirateur (1) a été vidé,
- une période d'utilisation depuis la dernière fois qu'un processus de nettoyage du filtre a été mis en place,
- une température du moteur (8) de l'aspirateur (1), et
- les paramètres environnementaux comme la concentration de poussière dans l'air entourant l'aspirateur (1), la température ou l'humidité à l'extérieur de l'aspirateur (1).
